# EUROPÄISCHE PATENTSCHRIFT

(11) **EP 1 068 614 B1**
(45) Veröffentlichungstag und Bekanntmachung des Hinweises auf die Patenterteilung: **11.09.2002**
(21) Anmeldenummer: 99924780.2
(22) Anmeldetag: 06.04.1999
(51) Int. Cl.: G11B 17/028, G11B 19/20, G11B 33/08

(54) **ABSPIELGERÄT**
PLAYBACK DEVICE
APPAREIL DE LECTURE

(30) Priorität: 07.04.1998 DE 19815492
(43) Veröffentlichungstag der Anmeldung: 17.01.2001
(73) Patentinhaber: ROBERT BOSCH GMBH, 70442 Stuttgart (DE)
(72) Erfinder: BUCHS, Willy, CH-1027 Lonay (CH); JEANNIN, Pierre, CH-1110 Morges (CH)
(86) Internationale Anmeldenummer: DE9901032
(87) Internationale Veröffentlichungsnummer: WO99052108

(56) Entgegenhaltungen:
- EP-A- 0 287 101
- EP-A- 0 287 153
- EP-A- 0 632 441
- FR-A- 2 534 405
- US-A- 4 641 152
- US-A- 5 610 900

## Beschreibung

### Stand der Technik

Die Erfindung geht von einem Abspielgerät nach der Gattung des Hauptanspruchs aus.

Aus der noch nicht vorveröffentlichten deutschen Patentanmeldung mit dem Aktenzeichen 1 96 42 343 ist bereits ein Abspielgerät bekannt, bei dem ein Compact-Disc-Motor über eine Achse einen als Compact-Disc ausgebildeten Aufzeichnungsträger antreibt, der zwischen eine erste mit der Achse verbundene Platte und eine zweite Platte eingespannt ist.

US-A-4 641 152 offenbart ein Abspielgerät gemäß des Oberbegriffes von Hauptanspruch 1.

### Vorteile der Erfindung

Das erfindungsgemäße Abspielgerät mit den Merkmalen des Hauptanspruchs hat demgegenüber den Vorteil, daß zwischen der Speicherplatte und der ersten Platte innerhalb eines vorgegebenen Bereiches ein vorgegebener Abstand vorgesehen ist und daß der Bereich und der Abstand so gewählt sind, daß bei etwa senkrecht zu den Plattenebenen auftretenden Erschütterungen des Abspielgerätes mit einer nicht über einem vorgegebenen Wert liegenden Beschleunigung eine Amplitude einer sich ergebenden Schwingung eines Außenrandes der Speicherplatte im Verhältnis zu einem Mittelpunkt der Speicherplatte ergibt, die unterhalb eines vorgegebenen Wertes liegt. Auf diese Weise kann durch die Luftschicht zwischen der Speicherplatte und der ersten Platte im vorgegebenen Bereich und durch die Volumenänderung zwischen der Speicherplatte und der ersten Platte im vorgegebenen Bereich bei der Schwingung der Speicherplatte, vor allem bei der Resonanzfrequenz der Speicherplatte die Schwingung der Speicherplatte gedämpft werden, ohne daß zusätzliche Dämpfungsmittel erforderlich sind. Die Luftschicht zwischen der Speicherplatte und der ersten Platte in dem vorgegebenen Bereich und die Volumenänderung zwischen der Speicherplatte und der ersten Platte in dem vorgegebenen Bereich bei der Schwingung der Speicherplatte wirken somit als Dämpfungsmittel.

Ein weiterer Vorteil besteht darin, daß Positionsfehler bei der Fokussierung von Spuren einer optischen Speicherplatte durch einen Lichtstrahl einer Lesevorrichtung zur Abtastung der in den Spuren gespeicherten Informationen bei vertikal zur Plattenebene auftretenden Schwingungen der Speicherplatte in großem Umfang unterdrückt werden können, so daß die Lesevorrichtung sehr widerstandsfähig gegenüber Erschütterungen des Abspielgerätes senkrecht zu der Plattenebene ist. Dies ist besonders vorteilhaft bei einem als Compact-Disc-Spieler ausgebildeten Abspielgerät, das eine Aufhängung eines Plattenlaufwerks ohne zusätzliche Dämpfungsmittel aufweist.

Ein weiterer Vorteil besteht darin, daß durch die Dämpfung der Schwingungen der Speicherplatte vertikal zur Plattenebene die Inertialkräfte, die bei Erschütterungen des Abspielgerätes auf das Gehäuse des Abspielgerätes übertragen werden, stark verringert werden.

Ein weiterer Vorteil besteht darin, daß durch die Dämpfung der Schwingungen der Speicherplatte vertikal zur Plattenebene eine zum Einspannen der Speicherplatte zwischen die erste und die zweite Platte erforderliche Feststellkraft, die zur Fixierung der Speicherplatte auf der zweiten Platte dient, reduziert wird.

Durch die Dämpfung der vertikal zur Plattenebene auftretenden Schwingungen der Speicherplatte läßt sich die Speicherplatte also mit einer geringeren Feststellkraft fixieren bei gleichzeitiger Verringerung ihrer Empfindlichkeit gegenüber Erschütterungen des Abspielgerätes. Wenn die zweite Platte und mit ihr die Speicherplatte und die erste Platte durch eine von einem Motor angetriebene Achse beim Betrieb zum Auslesen von Daten in Rotation versetzt wird, so wird der Motor und seine Lager durch die Feststellkraft zum Einspannen der Speicherplatte zwischen die erste Platte und die zweite Platte weniger belastet, so daß seine Lebensdauer verlängert und die Qualität des Auslesevorgangs langfristig aufrechterhalten wird.

Durch die in den Unteransprüchen aufgeführten Maßnahmen sind vorteilhafte Weiterbildungen und Verbesserungen des im Hauptanspruch angegebenen Abspielgerätes möglich.

Besonders vorteilhaft ist es, daß zwischen der Speicherplatte und der ersten Platte zumindest in einem Teil des vorgegebenen Bereiches ein im wesentlichen unelastisches und mit Poren versehenes Material angeordnet ist. Auf diese Weise wird verhindert, daß bei Schwingungen der Speicherplatte vertikal zur Plattenebene ein Zerkratzen einer eine beispielsweise metallisierte Oberfläche der Speicherplatte abdeckenden Schutzschicht durch wiederholtes Auftreffen der Speicherplatte auf der ersten Platte erfolgt. Eine Dämpfung der Schwingungen der Speicherplatte senkrecht zur Plattenebene ist dabei aufgrund der Poren des Materials möglich, die eine Luftschicht zwischen der Speicherplatte und der ersten Platte ermöglichen. Durch Verwendung eines unelastischen Materials wird die Dämpfung der Schwingungen der Speicherplatte vertikal zur Plattenebene weiter verbessert.

### Zeichnung

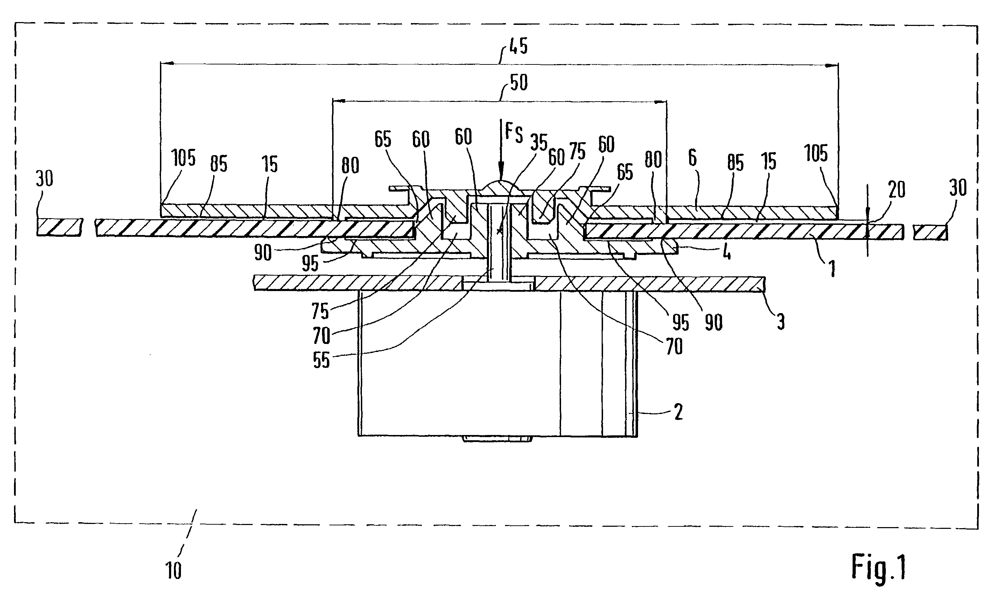

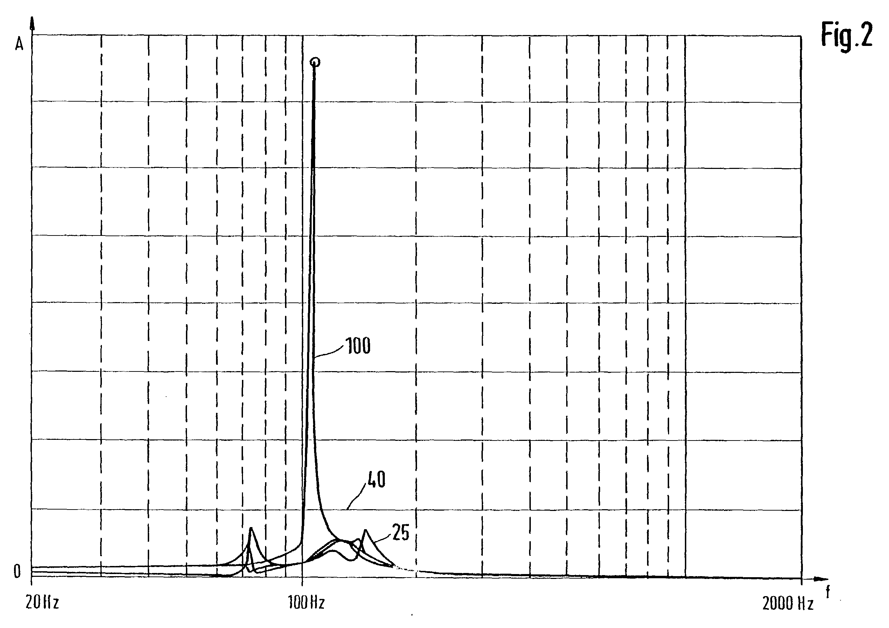

Ein Ausführungsbeispiel der Erfindung ist in der Zeichnung dargestellt und in der nachfolgenden Beschreibung näher erläutert. Es zeigen Figur 1 eine Seitenansicht eines erfindungsgemäßen Abspielgerätes und Figur 2 einen Verlauf einer Schwingungsamplitude über der Frequenz.

### Beschreibung des Ausführungsbeispiels

In Figur 1 kennzeichnet 10 ein Abspielgerät für Speicherplatten 1. Bei den Speicherplatten 1 kann es sich beispielsweise um optische, magnetische, opto-magnetische Speicherplatten 1 oder dergleichen handeln. In diesem Ausführungsbeispiel wird ein Abspielgerät 10 zum Abspielen einer optischen Speicherplatte 1, beispielsweise einer Compact-Disc, einer digitalen Video-Disc oder dergleichen beschrieben. Das Abspielgerät 10 kann dann entsprechend ein Compact-Disc-Spieler, ein Video-Disc-Spieler, oder dergleichen sein.

Das Abspielgerät 10 umfaßt einen Antriebsmotor 2, der an einem Blech 3 eines Grundträgers befestigt ist. Der Motor 2 treibt eine Achse 55 an. Auf die Achse 55 ist eine zweite kreisförmig ausgebildete Platte 4 montiert, die einen ringförmigen Vorsprung 60 konzentrisch zur zweiten Platte 4 aufweist, der in einen kreisförmigen Durchbruch 65 der Speicherplatte 1 eingreift. Die Speicherplatte 1 ist ebenfalls kreisförmig ausgebildet, wobei ein Mittelpunkt 35 der Speicherplatte 1 gleichzeitig der Mittelpunkt des Durchbruchs 65 ist. Die Speicherplatte 1 liegt auf der zweiten Platte 4 zentriert durch den Vorsprung 60 und konzentrisch zur zweiten Platte 4 auf. Der Vorsprung 60 weist eine ringförmige Einbuchtung 70 auf, die ebenfalls konzentrisch zur zweiten Platte 4 ist. In die ringförmige Einbuchtung 70 greift eine erste ringförmige Hervorhebung 75 einer ersten Platte 6, die ebenfalls konzentrisch zur zweiten Platte 4 ist, ein. Die erste Platte 6 ist ebenfalls kreisförmig ausgebildet. Durch ein in Figur 1 nicht dargestelltes Hebelsystem wird eine Feststellkraft F_{S} etwa senkrecht zur Plattenebene auf die erste Platte 6 etwa mittig ausgeübt, so daß die Speicherplatte 1 durch die Feststellkraft F_{S} zwischen die erste Platte 6 und die zweite Platte 4 eingespannt wird. Durch den Eingriff der ersten Hervorhebung 75 in die Einbuchtung 70 ist die erste Platte 6 zentriert und auf der zweiten Platte 4 fixiert. Die erste Platte 6 weist eine zweite ringförmige Hervorhebung 80 an einer der Speicherplatte 1 zugewandten Oberfläche 85 auf. Die zweite ringförmige Hervorhebung 80 der ersten Platte 6 ist dabei konzentrisch zur ersten ringförmigen Hervorhebung 75 der ersten Platte 6. Die zweite ringförmige Hervorhebung 80 der ersten Platte 6 weist jedoch einen größeren Radius als die erste ringförmige Hervorhebung 75 der ersten Platte 6 auf. Auf diese Weise liegt die zweite ringförmige Hervorhebung 80 der ersten Platte 6 auf der Seicherplatte 1 auf.

Die zweite Platte 4 umfaßt an einer der Speicherplatte 1 zugewandten Oberfläche 95 eine ringförmige Hervorhebung 90, die zum Vorsprung 60 konzentrisch ist und einen größeren Radius als der Vorsprung 60 aufweist. Die Speicherplatte 1 liegt somit auf der Hervorhebung 90 der zweiten Platte 4 auf. Der Radius der zweiten Hervorhebung 80 der ersten Platte 6 und der Radius der Hervorhebung 90 der zweiten Platte 4 sind etwa gleich, so daß sich die Feststellkraft F_{S} entlang eines zur zweiten Platte 4 konzentrischen Kreisrings auf der zweiten Platte 4 verteilt. Es gibt jedoch auch Abspielgeräte, bei denen die Feststellkraft F_{S} in umgekehrter Richtung auf die erste Platte 6 wirkt und dort entsprechend auf einem Kreisring oder auch beispielsweise auf drei um 120° voneinander beabstandeten Punkten verteilt wirkt. Die Feststellkraft F_{S} liegt beispielsweise zwischen 1 und 2N.

Auf dem Blech 3 des Grundträgers sind außerdem ein optischer Lesekopf und ein Mechanismus zur Führung und zum Transport des Lesekopfes angeordnet, in Figur 1 jedoch nicht dargestellt. Der Lesekopf tastet dabei mittels eines auf Spuren der Speicherplatte 1 fokussierten Lichtstrahls in den Spuren aufgezeichnete Informationen ab. Dazu wird die Speicherplatte 1 über die Achse 55 durch den Antriebsmotor 2 in Rotation versetzt.

Der Durchmesser der zweiten Platte 4 beträgt in diesem Ausführungsbeispiel etwa 30 mm und entspricht ungefähr dem Durchmesser der ringförmigen Hervorhebung 90 der zweiten Platte 4.

Wird das Abspielgerät 10 in einem Fahrzeug montiert, so verhalten sich in das Abspielgerät 10 eingelegte Speicherplatten 1 wie Schwinger, wenn das Abspielgerät 10, das beispielsweise in ein Autoradio integriert sein kann, Erschütterungen gemäß eines Beschleunigungsspektrums erfährt, die an sein Gehäuse übertragen werden. Durch die Feststellkraft F_{S}, die mittig auf die erste Platte 6 einwirkt, wird jegliches axiale Spiel im Bereich der im gemeinsamen Mittelpunkt der beiden Platten 4, 6 und der Speicherplatte 1 angeordneten Achse 55 unterdrückt. Auf diese Weise ergibt sich bei Einwirkung einer Vibration auf das Abspielgerät 10 in axialer Richtung, d. h. etwa vertikal zur Plattenebene der beiden Platten 4, 6 und der Speicherplatte 1, eine symmetrische Deformation der Speicherplatte 1 bezüglich der Achse 55, wobei sich eine Relativbewegung eines Außenrandes 30 der Speicherplatte 1 bezüglich dem Mittelpunkt 35 der Speicherplatte 1 ergibt. Die Amplitude dieser Bewegung hängt von der Frequenz und der Amplitude der Beschleunigung des Antriebsmotors 2, dem Material und den Abmessungen der Speicherplatte 1 selbst und vom verwendeten Feststellsystem zur zentrierten Einspannung der Speicherplatte 1 zwischen der ersten Platte 6 und der zweiten Platte 4 ab. Die Beschleunigung des Antriebsmotors 2 rührt dabei von Erschütterungen des Abspielgerätes 10 im Fahrzeug her. Die Amplitude der beschriebenen Relativbewegung der Speicherplatte 1 ist dabei maximal, wenn der Antriebsmotor 2 eine Beschleunigung mit einer Frequenz erfährt, die der Eigenfrequenz der Speicherplatte 1 und des Feststellsystems entspricht. Die Speicherplatte 1 wird dann bei ihrer Resonanzfrequenz angeregt und die Relativbewegung der Speicherplatte 1 nimmt sehr große Amplituden an, wenn die Dämpfung der Speicherplatte 1 und ihrer Montage schwach ist. Um den eingestellten Abstand zwischen einem Objektiv des optischen Lesekopfes und der Speicherplatte 1 mit einer zum fehlerfreien Auslesen der Spuren der Speicherplatte 1 erforderlichen Genauigkeit von zur Zeit etwa ±2 µm einzuhalten, wird das Objektiv des optischen Lesekopfes durch eine Positionsregelung angesteuert und folgt somit den Bewegungen der Speicherplatte 1.

Die Erfinder haben festgestellt, daß bei einem typischen Beschleunigungsspektrum, das sich aufgrund von Erschütterungen des Abspielgerätes 10 in etwa vertikaler Richtung zur Plattenebene der beiden Platten 4, 6 und der Speicherplatte 1 ergibt, ein Positionsfehler bei der Regelung der Fokussierung des Lichtstrahls des optischen Lesekopfes auf eine Spur der Speicherplatte 1 als Hauptursache die Relativbewegung der Speicherplatte 1 bei ihrer Resonanzfrequenz hat. Es wurde festgestellt, daß die maximal zulässige Beschleunigung, bei der noch keine Störungen der Abtastung der Spuren der Speicherplatte 1 auftreten, bei der Resonanzfrequenz der Speicherplatte 1 am geringsten ist.

Ein Außendurchmesser 50 der zweiten ringförmigen Hervorhebung 80 der ersten Platte 6 entspricht ungefähr dem Durchmesser der zweiten Platte 4, wobei die ringförmige Hervorhebung 90 der zweiten Platte 4 an einem Außenrand der zweiten Platte 4 verläuft. Ein Gesamtdurchmesser 45 der ersten Platte 6 ist größer als der Außendurchmesser 50 der zweiten ringförmigen Hervorhebung 80 der ersten Platte 6 und kleiner oder gleich einem Gesamtdurchmesser der Speicherplatte 1.

Zwischen dem Außendurchmesser 50 der zweiten ringförmigen Hervorhebung 80 der ersten Platte 6 und dem Gesamtdurchmesser 45 der ersten Platte 6 ist ein Abstand 20 zwischen der ersten Platte 6 und der Speicherplatte 1 vorgesehen. Auf diese Weise entsteht zwischen dem Außendurchmesser 50 der zweiten ringförmigen Hervorhebung 80 der ersten Platte 6 und dem Gesamtdurchmesser 45 der ersten Platte 6 ein konzentrisch zur zweiten Platte 4 angeordneter ringscheibenförmiger Bereich 15. Der Abstand 20 kann dabei beispielsweise einige Zehntel Millimeter betragen. Die in dem ringscheibenförmigen Bereich 15 vorhandene Luft bildet eine Luftschicht, die bei Schwingung der Speicherplatte 1 etwa senkrecht zur Plattenebene, vor allem bei der Resonanzfrequenz der Speicherplatte 1 diese Schwingungen dämpft. In einem Teil des ringscheibenförmigen Bereiches 15 oder auch im gesamten ringscheibenförmigen Bereich 15 kann ein im wesentlichen unelastisches und mit Poren versehenes Material angeordnet sein. Dabei kann es sich um eine Textil- oder Filzschicht handeln, die aufgrund der Poren ebenfalls Luft enthält und somit zur Dämpfung der beschriebenen Schwingungen der Speicherplatte 1 beiträgt. Diese Dämpfung wird durch die Unelastizität des Materials noch verbessert. Aufgrund der Luftschicht im ringscheibenförmigen Bereich 15 und der bei der Schwingung der Speicherplatte 1 etwa senkrecht zur Plattenebene auftretenden Volumenänderung des ringscheibenförmigen Bereiches 15 werden diese Schwingungen der Speicherplatte 1 etwa senkrecht zur Plattenebene gedämpft. Durch Veränderung der Abmessungen des ringscheibenförmigen Bereiches 15 können unterschiedliche Dämpfungen eingestellt werden. Die Abmessungen des ringscheibenförmigen Bereiches 15 können dabei beispielsweise dadurch geändert werden, daß bei gleichbleibendem Außendurchmesser 50 der zweiten ringförmigen Hervorhebung 80 der ersten Platte 6 der Gesamtdurchmesser 45 der ersten Platte 6 und/oder der Abstand 20 zwischen der ersten Platte 6 und der Speicherplatte 1 variiert werden. Bei entsprechenden Versuchen wurde festgestellt, daß eine ausreichende Dämpfung der Schwingungen der Speicherplatte 1 erreicht wird, wenn der Gesamtdurchmesser 45 der ersten Platte 6 größer als 50 mm gewählt wird.

Figur 2 zeigt einen Verlauf einer Amplitude A der Relativbewegung der Speicherplatte 1 zwischen ihrem Mittelpunkt 35 und ihrem Außenrand 30 in Abhängigkeit der Frequenz f. Zur Ermittlung des Frequenzgangs dieser Amplitude wurde der Antriebsmotor 2 etwa vertikal zur Plattenebene der Speicherplatte 1 einer sinusförmigen Bewegung unterworfen, deren Frequenz zwischen 20 Hz und 2000 Hz verändert wurde. Eine bei der Bewegung auftretende Beschleunigung 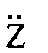 ₂ wurde konstant eingestellt. Zur Ermittlung des Frequenzgangs der Amplitude A gemäß Figur 2 wurde eine Beschleunigung von 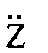 ₂=4m/s² gewählt. Bei dieser Bewegung deformiert sich die Speicherplatte 1 etwa senkrecht zur Plattenebene der Speicherplatte 1, wobei die sich ergebende Relativbewegung zwischen dem Außenrand 30 der Speicherplatte 1 und einem Kreisring der Speicherplatte 1 im Bereich der zweiten ringförmigen Hervorhebung 80 der ersten Platte 6 stellvertretend für den Mittelpunkt 35 gemessen wurde. Die Amplitude A dieser Relativbewegung ist auf die konstante Beschleunigung 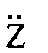 ₂ normiert in Figur 2 über der Frequenz f aufgetragen. Sie ist dort durch das Bezugszeichen 25 gekennzeichnet und liegt über dem gesamten betrachteten Frequenzbereich unterhalb eines vorgegebenen Amplitudenwertes 40. Dabei wurde als Gesamtdurchmesser 45 der ersten Platte 6 ein Wert von 60 mm, für den Außendurchmesser 50 der zweiten ringförmigen Hervorhebung 80 der ersten Platte 6 30 mm und für den Abstand 20 zwischen der ersten Platte 6 und der Speicherplatte 1 ein Wert von 0,1 mm gewählt. Als Speicherplatte 1 wurde für die Messungen die Philips-Testplatte mit der Bezeichnung "SBC 444" verwendet. Als Feststellkraft F_{S} wurden 2N eingestellt. Als maximale Amplitude der Schwingungen ergab sich für die Relativbewegung ein Wert von 40 µm.

Die gleichen Messungen wurden auch mit einer ersten Platte 6 durchgeführt, deren Gesamtdurchmesser 45 etwa dem Außendurchmesser 50 der zweiten ringförmigen Hervorhebung 80 der ersten Platte 6 entspricht, so daß sich kein dämpfender ringscheibenförmiger Bereich 15 ergibt. Dabei ergibt sich eine in Figur 2 durch das Bezugszeichen 100 gekennzeichnete Amplitude der Relativbewegung zwischen dem Außenrand 30 der Speicherplatte 1 und dem Kreisring der Speicherplatte 1, der sich im Bereich der zweiten ringförmigen Hervorhebung 80 der ersten Platte 6 befindet, wobei diese Amplitude 100 bei der Resonanzfrequenz der Speicherplatte 1 von 106,8 Hz einen Maximalwert von 487 µm erreicht. Bei anderen Speicherplatten ergaben sich für Resonanzfrequenzwerte zwischen 85 Hz und 115 Hz Amplituden in der gleichen Größenordnung. Daraus ergibt sich bei Verwendung des ringscheibenförmigen Bereiches 15 mit den beschriebenen Abmessungen von 60 mm für den Gesamtdurchmesser 45 der ersten Platte 6 und 0,1 mm für den Abstand 20 zwischen der ersten Platte 6 und der Speicherplatte 1 eine Verringerung der Amplitude der Relativbewegung um etwa den Faktor 12. Der gemäß Figur 2 beispielhaft vorgegebene Wert 40 für die Amplitude A, der die obere Grenze für die Amplitude der Relativbewegung sein und von der Amplitude der Relativbewegung unterschritten werden soll, entspricht etwa 70 µm.

Bei dem Gesamtdurchmesser 45 der ersten Platte 6 von 60 mm und doppeltem Abstand 20 zwischen der ersten Platte 6 und der Speicherplatte 1 von 0,2 mm ergibt sich eine maximale Amplitude für die Relativbewegung, die gegenüber dem Maximum der Amplitude 100 für die beschriebene Anordnung ohne dämpfenden ringscheibenförmigen Bereich 15 lediglich eine Verringerung um den Faktor 2,5 aufweist und damit eine Überschreitung des vorgegebenen Amplitudenwertes 40 zur Folge hat.

Durch entsprechende Dimensionierung des ringscheibenförmigen Bereiches 15 mittels der Wahl des Gesamtdurchmessers 45 der ersten Platte 6, des Außendurchmessers 50 der zweiten ringförmigen Hervorhebung 80 der ersten Platte 6 und des Abstandes 20 zwischen der ersten Platte 6 und der Speicherplatte 1 kann die Dämpfung durch die Luftschicht in diesem ringscheibenförmigen Bereich 15 so eingestellt werden, daß bei etwa senkrecht zur Plattenebene der Platten 4, 6 und der Speicherplatte 1 auftretenden Erschütterungen des Abspielgerätes 10 mit einer nicht über einem vorgegebenen Wert liegenden Beschleunigung eine Amplitude der sich ergebenden Schwingung des Außenrandes 30 der Speicherplatte 1 im Verhältnis zum Mittelpunkt 35 oder zu einem im Bereich der zweiten Hervorhebung 80 der ersten Platte 6 befindlichen Kreisring der Speicherplatte 1 oder einem anderen Punkt oder Bereich der Speicherplatte 1, vorzugsweise in der Nähe deren Mittelpunktes 35, unterhalb eines vorgegebenen Wertes liegt.

Zur Realisierung des ringscheibenförmigen Bereiches 15 ist es erforderlich, daß der Gesamtdurchmesser 45 der ersten Platte 6 einen vorgegebenen Wert überschreitet, der in dem beschriebenen Ausführungsbeispiel 30 mm beträgt und dem Außendurchmesser 50 der zweiten ringförmigen Hervorhebung 80 der ersten Platte 6 entspricht. Auf diese Weise überschreitet auch der Innendurchmesser des ringscheibenförmigen Bereiches 15 den Außendurchmesser 50 der zweiten ringförmigen Hervorhebung 80 der ersten Platte 6 als vorgegebenen Wert.

Als Abstand 20 zwischen der ersten Platte 6 und der Speicherplatte 1 im ringscheibenförmigen Bereich 15 können auch 0 mm eingestellt werden, wobei sich bei einem solchen Abstand 20 bei der Schwingung der Speicherplatte 1 etwa senkrecht zur Plattenebene der Speicherplatte 1 dennoch ein sich änderndes Volumen mit einer Luftschicht zwischen der ersten Platte 6 und der Speicherplatte 1 einstellt und als Dämpfungsmittel dient. Bei ansonsten gleich gewählten Parametern ergibt sich dabei eine Dämpfung der Amplitude der Relativbewegung, die in der gleichen Größenordnung wie bei der Wahl eines Abstandes 20 von 0,1 mm liegt.

Wenn die Speicherplatte 1 eine ebene Oberfläche aufweist, bleibt der Abstand 20 im ganzen ringscheibenförmigen Bereich 15 etwa konstant und die Speicherplatte 1 gelangt dort nicht in Berührung mit der ersten Platte 6. In der Tat wird die Speicherplatte 1 in einem Randbereich 105 der ersten Platte 6 nur um einige µm deformiert, da die Deformationen mit vierter Potenz des Radius zum Plattenäußeren hin zunehmen und somit 16 mal kleiner beim Randbereich 105, etwa 30 mm vom Mittelpunkt 35 der Speicherplatte 1 entfernt, als beim Außenrand 30 der Speicherplatte 1 sind, wenn der Gesamtdurchmesser der Speicherplatte 1 etwa doppelt so groß wie der Gesamtdurchmesser 45 der ersten Platte 6 ist.

Selbst bei Messung der Testspeicherplatte "Abex TCD.731 A", die einen axialen Schlag von 1 mm aufweist, ergab sich bei Wahl des Abstandes 20 von 0,1 mm und ansonsten gleichen Parametern ein Amplitudenmaximum der Relativbewegung, das gegenüber dem Amplitudenmaximum bei einer Anordnung ohne ringscheibenförmigen Bereich 15 gemäß der Amplitude 100 in Figur 2 noch um den Faktor 8 niedriger liegt.

Um dennoch die mögliche Gefahr eines Zerkratzens einer eine metallisierte Oberfläche der Speicherplatte 1 bedeckenden Schutzschicht zu verhindern, kann unter die erste Platte 6 zumindest in einem Teil des ringscheibenförmigen Bereiches 15 ein im wesentlichen unelastisches und mit Poren versehenes Material, beispielsweise in Form eines dünnen Filzes geklebt werden. Dabei kann dieses Material auch die gesamte der Speicherplatte 1 zugewandte Oberfläche 85 der ersten Platte 6 innerhalb des ringscheibenförmigen Bereiches 15 bedecken. Es kann jedoch auch vorgesehen sein, das Material nur in einem Teil des ringscheibenförmigen Bereichs 15 auf die der Speicherplatte 1 zugewandte Oberfläche 85 der ersten Platte 6 zu kleben. Dieser Teil kann dabei ebenfalls ringförmig und konzentrisch zur zweiten Platte 4 sein. So kann beispielsweise ein ringförmiges Filzmaterial mit einem Innendurchmesser von 57 mm und einem dem Gesamtdurchmesser 45 der ersten Platte 6 entsprechenden Außendurchmesser von 60 mm auf die der Speicherplatte 1 zugewandte Oberfläche 85 der ersten Platte 6 konzentrisch zur zweiten Platte 4 geklebt werden. Die Dicke des Materials kann dabei so gewählt werden, daß es die der ersten Platte 6 zugewandte Oberfläche der Speicherplatte 1 ebenfalls berührt. Die Dämpfung der Amplitude der Relativbewegung der Speicherplatte 1 liegt bei Verwendung eines im wesentlichen unelastischen und mit Poren versehenen Materials zumindest in einem Teil des ringscheibenförmigen Bereiches 15 in der gleichen Größenordnung wie ohne Verwendung eines solchen Materials im ringscheibenförmigen Bereich 15, wobei die Dämpfung der Schwingungen dieser Relativbewegung auch bei Verwendung des im wesentlichen unelastischen und mit Poren versehenen Materials im ringscheibenförmigen Bereich 15 durch die Volumenänderung zwischen der ersten Platte 6 und der Speicherplatte 1 und die zwischen dem Material und der der ersten Platte 6 zugewandten Oberfläche der Speicherplatte 1 und die im Material selbst vorhandene Luftschicht bewirkt wird.

Statt des Filzes kann auch ein im wesentlichen gleich wirkendes Textilmaterial verwendet werden. Bei Verwendung eines Abstandes 20 zwischen 10 µm und 200 µm lassen sich ohne Verwendung eines Materials im ringscheibenförmigen Bereich 15 vergleichsweise hohe Dämpfungswerte für die Relativbewegung realisieren. Bei Verwendung des im wesentlichen unelastischen und mit Poren versehenen Materials zumindest in einem Teil des ringscheibenförmigen Bereiches 15 ergeben sich vergleichsweise hohe Dämpfungswerte für die Relativbewegung bei Wahl eines Abstandes 20 zwischen 200 µm und 1000 µm. Das auf die der Speicherplatte 1 zugewandte Oberfläche 85 der ersten Platte 6 geklebte Material kann, muß jedoch nicht die der ersten Platte 6 zugewandte Oberfläche der Speicherplatte 1 berühren.

## Patentansprüche

1. Abspielgerät (10) für eine Speicherplatte (1) mit einer ersten Platte (6) und einer zweiten Platte (4), wobei die Speicherplatte (1) zwischen der ersten Platte (6) und der zweiten Platte (4) einspannbar ist und zwischen der Speicherplatte (1) und der ersten Platte (6) innerhalb eines Bereiches (15) ein Abstand (20) vorgesehen ist, **dadurch gekennzeichnet, daß** der Bereich (15) durch entsprechende Dimensionierung der ersten Platte und der Abstand (20) so einstellbar sind, daß sich bei etwa senkrecht zu den Plattenebenen auftretenden Erschütterungen des Abspielgerätes (10) mit einer nicht über einem vorgegebenen Wert liegenden Beschleunigung eine Amplitude (25) einer sich ergebenden Schwingung eines Außenrandes (30) der Speicherplatte (1) im Verhältnis zu einem Mittelpunkt (35) der Speicherplatte (1) ergibt, die unterhalb eines vorgegebenen Wertes (40) liegt.

2. Abspielgerät (10) nach Anspruch 1, **dadurch gekennzeichnet, daß** die erste und die zweite Platte (6, 4) jeweils kreisförmig ausgebildet sind und daß der Durchmesser (45) der ersten Platte (6) einen vorgegebenen Wert (50) überschreitet.

3. Abspielgerät (10) nach Anspruch 2, **dadurch gekennzeichnet, daß** der Bereich (15) ringförmig ausgebildet ist und daß der Innendurchmesser des Bereiches (15) den vorgegebenen Wert (50) überschreitet.

4. Abspielgerät (10) nach Anspruch 1, 2 oder 3, **dadurch gekennzeichnet, daß** zwischen der Speicherplatte (1) und der ersten Platte (6) zumindest in einem Teil des vorgegebenen Bereiches (15) ein im wesentlichen unelastisches und mit Poren versehenes Material angeordnet ist.

5. Abspielgerät (10) nach Anspruch 4, **dadurch gekennzeichnet, daß** das Material als Filz oder Textil ausgebildet ist.

## Claims

1. Playback device (10) for a storage disc (1) having a first plate (6) and a second plate (4), the storage disc (1) being able to be clamped in between the first plate (6) and the second plate (4) and a distance (20) being provided between the storage disc (1) and the first plate (6) within a region (15), **characterized in that** the region (15), by corresponding dimensioning of the first plate, and the distance (20) can be set in such a way that, in the event of vibrations of the playback device (10) which occur approximately perpendicularly to the plate planes, with an acceleration which does not lie above a predetermined value, an amplitude (25) of a resulting oscillation of an outer edge (30) of the storage disc (1) in relation to a central point (35) of the storage disc (1) is produced which lies below a predetermined value (40).

2. Playback device (10) according to Claim 1, **characterized in that** the first and second plates (6, 4) are each of circular design, and **in that** the diameter (45) of the first plate (6) exceeds a predetermined value (50).

3. Playback device (10) according to Claim 2, **characterized in that** the region (15) is of annular design, and **in that** the internal diameter of the region (15) exceeds the predetermined value (50).

4. Playback device (10) according to Claim 1, 2 or 3, **characterized in that** an essentially inelastic material provided with pores is arranged between the storage disc (1) and the first plate (6) at least in a part of the predetermined region (15).

5. Playback device (10) according to Claim 4, **characterized in that** the material is formed as felt or textile.

## Revendications

1. Appareil de lecture (10) pour un disque de mémoire (1) comprenant un premier disque (6) et un second disque (4),
le disque de mémoire (1) étant serré entre le premier disque (6) et le second disque (4), avec un intervalle (24) prévu entre le disque de mémoire (1) et le premier disque (6) à l'intérieur d'une zone (15),
**caractérisé en ce que**
la zone (15), par un dimensionnement correspondant du premier disque, et l'intervalle (20) sont réglables de façon que sensiblement perpendiculairement aux secousses de l'appareil de lecture (10) produites dans les plans des disques, avec une accélération qui ne dépasse pas une valeur prédéterminée, on aura une amplitude (25) d'une oscillation résultante du bord extérieur (30) du disque de mémoire (1) par rapport au centre (35) du disque de mémoire (1) qui est inférieure à une valeur prédéterminée (40).

2. Appareil de lecture (10) selon la revendication 1,
**caractérisé en ce que**
le premier et le second disque (6, 4) sont des disques circulaires et le diamètre (45) du premier disque (6) dépasse une valeur prédéterminée (50).

3. Appareil de lecture (10) selon la revendication 2,
**caractérisé en ce que**
la zone (15) est de forme annulaire et le diamètre intérieur de la zone (15) dépasse la valeur prédéterminée (50).

4. Appareil de lecture (10) selon l'une quelconque des revendications 1, 2 ou 3,
**caractérisé en ce qu'**
au moins dans une partie de la zone (15) prédéterminée, entre le disque de mémoire (1) et le premier disque (6), on a une matière essentiellement non élastique, ayant des pores.

5. Appareil de lecture (10) selon la revendication 4,
**caractérisé en ce que**
la matière est du feutre ou du textile.
